**Europäisches Patentamt**

**European Patent Office**

**Office européen des brevets**

(19)

(11) Veröffentlichungsnummer : **0 470 114 B1**

(12) **EUROPÄISCHE PATENTSCHRIFT**

(45) Veröffentlichungstag der Patentschrift :
**01.12.93 Patentblatt 93/48**

(51) Int. Cl.⁵ : **B62D 3/06, F16H 57/02**

(21) Anmeldenummer : **90906205.1**

(22) Anmeldetag : **24.04.90**

(86) Internationale Anmeldenummer :
**PCT/EP90/00655**

(87) Internationale Veröffentlichungsnummer :
**WO 90/13464 15.11.90 Gazette 90/26**

(54) **LENKGETRIEBE FÜR FAHRZEUGE.**

(30) Priorität : **29.04.89 DE 3914272**

(43) Veröffentlichungstag der Anmeldung :
**12.02.92 Patentblatt 92/07**

(45) Bekanntmachung des Hinweises auf die
Patenterteilung :
**01.12.93 Patentblatt 93/48**

(84) Benannte Vertragsstaaten :
**DE ES GB**

(56) Entgegenhaltungen :
**WO-A-84/01550**
**WO-A-89/01101**
**DE-A- 3 017 736**
**GB-A- 2 074 693**
**US-A- 4 226 431**

(73) Patentinhaber : **ZF FRIEDRICHSHAFEN
Aktiengesellschaft
D-88038 Friedrichshafen (DE)**

(72) Erfinder : **HUBER, Otto
Uhlandstrasse 14
D-7076 Wissgoldingen (DE)**

## Beschreibung

Ein Lenkgetriebe nach dem Oberbegriff des Anspruchs 1 ist aus der DE-A-32 38 740 bekannt. Dieses Lenkgetriebe besitzt als Antriebsglied eine als Arbeitskolben ausgebildete Lenkmutter, die beim Drehen an einer Lenkspindel eine Axialbewegung ausführt. Die Lenkmutter greift über eine zahnstangenartige Verzahnung in ein Zahnsegment ein. Das Zahnsegment ist Teil einer einen Lenkhebel tragenden Segmentwelle. Ein Lenkgestänge verbindet den Lenkhebel mit den Vorderrädern. Zum leichteren Einstellen des Verzahnungseingriffs von Lenkmutter und Zahnsegment lagert man die Segmentwelle in zwei Lagerbuchsen mit exzentrischen Bohrungen. Diese Lagerbuchsen ermöglichen eine Zustellung der Segmentwelle in Richtung der Lenkmutter, bis die richtige Verzahnungseinstellung gefunden ist. Die Lagerbuchsen weisen stirnseitig axial überstehende Ringansätze auf, die sich in Gehäusenuten durch Verstemmen eindrücken lassen, so daß sogenannte Auswölbungen in diese Gehäusenuten hineinragen. Die Auswölbungen reichen im Normalfalle völlig aus, um die Lagerbunde im Lenkgehäuse gegen Drehen zu sichern. Setzt man ein mit einem derartigen Lenkgetriebe ausgerüstetes Fahrzeug unter Uberlastungsbedingungen (zu hohe Zuladung, nicht angepaßte Geschwindigkeit) im schweren Gelände ein, wie sie z. B. bei militärischer Verwendung vorkommen, so ist die Steifigkeit der beschriebenen Verdrehsicherung noch nicht voll ausreichend. In Einzelfällen ist durch die starken Rüttelbewegungen nicht auszuschließen, daß sich die Auswölbungen zurückverformen und sich anschließend die Lagerbunde verdrehen, wodurch ein zu großes Lenkungsspiel auftritt.

Es ist daher Aufgabe der Erfingung, eine Möglichkeit zu finden, die Verdrehsicherung der Lagerbunde mit geringem Aufwand auch für Überlastbeanspruchungen brauchbar auszulegen zu machen.

Diese Aufgabe läßt sich in Einrichtungen nach dem Oberbegriff des Hauptanspruchs dadurch lösen, daß in die in die Gehäusenuten hineinragenden Auswölbungen an einem Sicherungselement angeformte und entsprechend abgeschrägte Nasen eingreifen. Das Sicherungselement läßt sich als Ring ausführen, zweckmäßig ist auch entsprechend der Anzahl der Auswölbungen einzelne Segmente zu verwenden. Die an dem Ring oder an den Einzelsegmenten gebildeten Nasen verhindern hierbei zuverlässig ein Zurückverformen der Auswölbungen. Die Sicherungselemente lassen sich leicht montieren, da man sie nur in der richtigen Stellung in die Lagerbuchsen einlegen muß. Anschließend erfolgt die axiale Fixierung durch Federringe. Auf diese Weise erhält man eine preiswerte spanlose Sicherungsmöglichkeit für höchste Beanspruchungen.

Die Erfindung ist nicht auf die Merkmalskombinationen der Ansprüche beschränkt. Für den Fachmann ergeben sich weitere sinnvolle Kombinationsmöglichkeiten von Ansprüchen und einzelnen Anspruchsmerkmalen aus der Aufgabenstellung.

Die Erfindung ist nachfolgend anhand eines in der Zeichnung dargestellten Ausführungsbeispieles näher erläutert. Es zeigen:

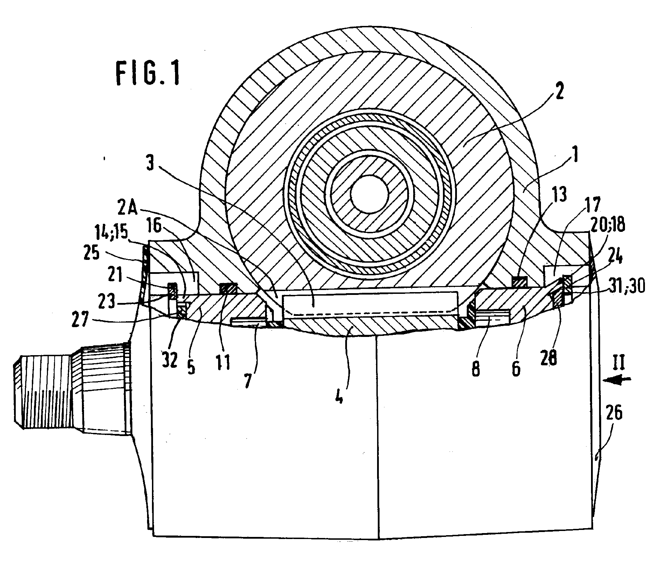

Fig. 1      einen Teilquerschnitt durch ein Lenkgetriebe,

Fig. 2      eine vergrößerte Draufsicht in Richtung des Pfeiles II in Fig. 1 bei weggelassener Staubkappe und mit um 60° verdreht gezeichneter Lagerbuchse,

Fig. 3      einen Schnitt durch das eine Segmentwellenlager entsprechend Fig. 2.

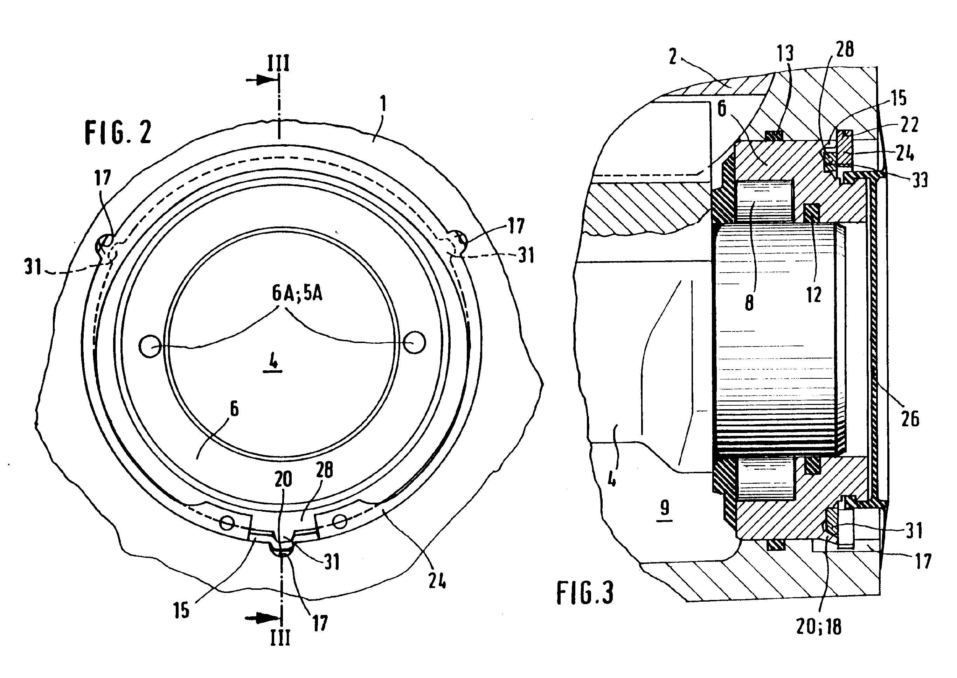

In einem Getriebegehäuse 1 ist ein als Lenkmutter dienender, eine zahnstangenartige Verzahnung 2A tragender Arbeitskolben 2 verschieblich gelagert. Die zahnstangenartige Verzahnung 2A am Arbeitskolben 2 steht im Eingriff mit einem Lenksegment 3 einer Segmentwelle 4. Die Segmentwelle 4 ist in zwei exzentrisch gebohrten Lagerbuchsen 5 und 6 über Wälzlager 7 und 8 gelagert. Um die erforderliche Spielfreiheit einzustellen, läßt sich durch Verdrehen der exzentrisch gebohrten Lagerbuchsen 5 und 6, die Segmentwelle 4 in Richtung auf die Verzahnung 2A des Arbeitskolbens 2 bewegen. Zum Verdrehen der Lagerbuchsen 5 und 6 sieht man zum Ansetzen eines Werkzeugs Bohrungen 5A und 6A (Fig. 2) vor. Ein Druckraum 9 des Gehäuses 1 ist durch Dichtringe 10, 11 bzw. 12, 13 nach außen abgedichtet.

Die Lagerbuchsen 5 und 6 weisen Ringansätze 14 und 15 auf. Außerdem sind in das Gehäuse 1 in Achsrichtung verlaufende kurze Nuten 16 und 17 eingearbeitet. Nach dem Einsetzen der Lagerbuchsen 5 und 6 und der Verzahnungseinstellung lassen sich die Ringansätze 14 und 15 in den Nuten 16 und 17 partiell verstemmen, so daß Auswölbungen 18 und 20 entstehen. Zur axialen Fixierung der Lagerbuchsen 5 und 6 sieht man in Gehäuseringnuten 21, 22 eingreifende Federringe 23 bzw. 24 vor. Die Segmentwellenlagerung deckt man mit Staubkappen 25 bzw. 26 ab.

Nach der Erfindung legt man zwischen die Lagerbuchsen 5 und 6 und die Federringe 23 und 24 Sicherungselemente 27, 28 mit angeformten Nasen 30 und 31. Die Sicherungselemente 27, 28, die sich radial in Aussparungen 32 und 33 der Lagerbuchsen 5 und 6 abstützen, ordnet man so an, daß ihre Nasen 30 und 31 unter die Auswölbungen 18 und 20 greifen. Hierbei ist es für eine gute Anlage vorteilhaft, wenn die Nasen 30 und 31 entsprechend der Auswölbung 18 bzw. 20 abgeschrägt sind Auf diese Weise läßt sich sicherstellen, daß die an den Ringansätzen 14 und 15 vorhandenen Auswölbungen 18 und 20 bei extremer Beanspruchung zurückverformt werden.

Die die Nasen 30 und 31 tragenden Sicherungselemente 27 und 28 können für jede Lagerseite jeweils als geschlossener Ring (wie dargestellt) oder als Einzelsegmente ausgeführt sein. In der Ausführung als Einzelsegmente kann man entsprechend der Zahl der Nuten 16 und 17 eine gleichgroße Anzahl von Sicherungselementen am Umfang verteilen.

Bezugszeichen

| 1 | Getriebegehäuse | 30 | Nase |
|---|---|---|---|
| 2 | Arbeitskolben | 31 | Nase |
| 2A | zahnstangenartige Verzahnung | 32 | Aussparung |
| 3 | Lenksegment | 33 | Aussparung |
| 4 | Segmentwelle | | |
| 5 | Lagerbuchse | | |
| 5A | Bohrungen | | |
| 6 | Lagerbuchse | | |
| 6A | Bohrungen | | |
| 7 | Wälzlager | | |
| 8 | Wälzlager | | |
| 9 | Druckraum | | |
| 10 | Dichtring | | |
| 11 | Dichtring | | |
| 12 | Dichtring | | |
| 13 | Dichtring | | |
| 14 | Ringansatz | | |
| 15 | Ringansatz | | |
| 16 | Nut in 1 | | |
| 17 | Nut in 1 | | |
| 18 | Auswölbung | | |
| 19 | - | | |
| 20 | Auswölbung | | |
| 21 | Gehäuseringnut | | |
| 22 | Gehäuseringnut | | |
| 23 | Federring | | |
| 24 | Federring | | |
| 25 | Staubkappe | | |
| 26 | Staubkappe | | |
| 27 | Sicherungselement | | |
| 28 | Sicherungselement | | |
| 29 | - | | |

3

**Patentansprüche**

1. Lenkgetriebe für Fahrzeuge mit folgenden Merkmalen:
   - ein Getriebegehäuse (1) nimmt ein Antriebsglied auf, das über eine Verzahnung in ein Lenksegment (3) eingreift;
   - das Lenksegment (3) sitzt auf einer Segmentwelle (4), die zu beiden Seiten des Lenksegments über exzentrisch gebohrte Lagerbuchsen (5,6) einstellbar ist;
   - die Lagerbuchsen (5,6) besitzen an ihrer freien Stirnseite einen Ringansatz (14,15), der zur Drehsicherung partiell in ein oder mehrere Gehäusenuten (16,17) verstemmbar ist, so daß formschlüssige Auswölbungen (18,20) entstehen;
   - die Lagerbuchsen sind axial durch Federringe gehalten,
   dadurch **gekennzeichnet,** daß unter die in die Gehäusenuten (16, 17) hineinragenden Auswölbungen (18, 20) der Ringansätze (14, 15) an einem Sicherungselement (27, 28) angeformte Nasen (30, 31) greifen.

2. Lenkgetriebe nach Anspruch 1, dadurch **gekennzeichnet,** daß die Nasen (30 und 31) entsprechend der Form der Auswölbung (18 bzw. 20) abgeschrägt sind.

3. Lenkgetriebe nach Anspruch 1, dadurch **gekennzeichnet,** daß das Sicherungselement (27, 28) als geschlossener Ring ausgeführt ist, der sich in einer Aussparung (32, 33) der Lagerbuchse (5 bzw. 6) abstützt.

4. Lenkgetriebe nach Anspruch 1, dadurch **gekennzeichnet,** daß das Sicherungselement entsprechend der Anzahl der Auswölbungen (18, 20) in Einzelsegmente unterteilt ist.


**Claims**

1. A steering gear for vehicles, with the following characteristics:
   - a steering gear housing (1) takes up an actuating member which is engaged in a steering sector (3) by means of a gear element;
   - the steering sector (3) is mounted on a sector shaft (4) which is adjustable on both sides of the steering sector via eccentrically drilled bearing bushes (5, 6);
   - the bearing bushes (5, 6) are provided at their free face ends with ring collars (14, 15) which can be crimped partially into one or several housing recesses (16, 17) to produce form lokking protrusions (18, 20) to prevent the elements from rotating;
   - the bearing bushes are axially fixed by spring washers,
   **characterized** in that lugs (30, 31) formed on securing elements (27, 28) engage below the protrusions (18, 20) of ring collars (14, 15) protruding into the housing recesses (16,, 17).

2. A steering gear according to claim 1, **characterized** in that the lugs (30, 31) are chamfered to fit the shape of the protrusions (18 or 20).

3. Steering gear according to claim 1, **characterized** in that the securing elements (27, 28) are designed as a closed ring supported in the recesses (32, 33) of bearing bushes (5 or 6).

4. Steering gear according to claim 1, **characterized** in that the securing element is split into several segments to fit the number of protrusions (18, 20) provided.


**Revendications**

1. Mécanisme de direction pour véhicules, comportant les caractéristiques suivantes:
   - un carter de boîte (1) comprend un élément d'entraînement qui engrène dans un secteur de direction (3) par une denture;
   - le secteur de direction (3) est placé sur un arbre à secteur denté (4) ajustable des deux côtés du secteur de direction au moyen de douilles-paliers (5, 6) percées de façon excentrique;
   - les douilles-paliers (5, 6) comportent sur leur face frontale libre une saillie annulaire (14, 15) pouvant être partiellement matée dans une ou plusieurs rainures de carter (16, 17) pour empêcher la rotation, de sorte qu'il y ait formation de protubérances à engagement positif (18, 20);

- les douilles-paliers sont retenues dans le sens axial par des rondelles élastiques,
**caractérisé** en ce que des tenons (30, 31) intégrés dans un élément de freinage (27, 28) engrènent sous les protubérances (18, 20) des saillies annulaires (14, 15) qui s'avancent dans les rainures de carter (16, 17).

2. Mécanisme de direction selon la revendication 1, **caractérisé** en ce que les tenons (30 et 31) sont biseautés en fonction de la forme de la protubérance (18, voire 20).

3. Mécanisme de direction selon la revendication 1, **caractérisé** en ce que l'élément de freinage (27, 28) est conçu en tant que bague fermée prenant appui dans un évidement (32, 33) de la douille-palier (5, voire 6).

4. Mécanisme de direction selon la revendication 1, **caractérisé** en ce que l'élément de freinage est subdivisé en secteurs séparés en fonction du nombre des protubérances (18, 20).

FIG.1

FIG.3

FIG. 2